# EUROPÄISCHE PATENTSCHRIFT

(11) **EP 3 702 296 B1**
(45) Veröffentlichungstag und Bekanntmachung des Hinweises auf die Patenterteilung: **05.05.2021**
(21) Anmeldenummer: 20157760.8
(22) Anmeldetag: 17.02.2020
(51) Int. Cl.: B65D 33/24, B65D 75/54

(54) **TASCHE FÜR DEN VERSAND VON WAREN IM VERSANDHANDEL**
BAG FOR THE DISPATCH OF GOODS FOR SHIPPING
SAC POUR L'EXPÉDITION DE MARCHANDISES DANS LA VENTE PAR CORRESPONDANCE

(30) Priorität: 28.02.2019 DE 102019105087
(43) Veröffentlichungstag der Anmeldung: 02.09.2020
(73) Patentinhaber: Lidl Digital International GmbH & Co. KG, 74172 Neckarsulm (DE)
(72) Erfinder: KÖHLER, Stefan, 74172 Neckarsulm (DE); SCHWARZ, Falk-Johannes, 74172 Neckarsulm (DE); HOFFMANN, Michael, 74172 Neckarsulm (DE)
(74) Vertreter: Weickmann & Weickmann PartmbB

(56) Entgegenhaltungen:
- EP-A2- 0 296 482
- WO-A1-96/29256
- US-A- 4 706 297
- US-A1- 2010 270 317
- US-A1- 2015 298 829

## Beschreibung

### I. Anwendungsgebiet

Die Erfindung betrifft eine Tasche für den Versand von Waren im Versandhandel. Sie dient insbesondere der Müllvermeidung, da sie als Mehrwegversandtasche verwendet werden kann.

### II. Technischer Hintergrund

Bekanntermaßen wird im Versandhandel eine Vielzahl von Verpackungen zum Verpacken der zu versendenden Waren benötigt. In Abhängigkeit von Art und Größe der Waren kommen verschiedenartige Verpackungen zum Einsatz, die sich zur Gewährleistung einer ausreichenden Versand- bzw. Transportsicherheit nach Art und Größe voneinander unterscheiden. Das Versandhandelsunternehmen muss daher eine entsprechende Vielzahl von Verpackungsarten und -größen vorhalten.

Darüber hinaus kommen im Versandhandel regelmäßig Einwegverpackungen zum Einsatz. Die meisten Kunden des Versandhandelsunternehmens entsorgen die Verpackung zumindest immer dann, wenn sie die gelieferte Ware behalten. Es fällt dementsprechend viel Müll an und die zur Herstellung der Verpackungen benötigten Rohstoffe werden nicht optimal genutzt.

Aus der US 4 706 297 A ist eine wiederverwendbare Tasche bekannt, die rückseitige Verschlussmittel, zusätzliche rückseitige Verschlussmittel, erste vorderseitige Verschlussmittel sowie zweite vorderseitige Verschlussmittel aufweist. Der Abstand der zweiten vorderseitigen Verschlussmittel von dem Öffnungsrand der Tasche ist größer als der Abstand der ersten vorderseitigen Verschlussmittel von dem Öffnungsrand. Des Weiteren ist der Abstand der ersten vorderseitigen Verschlussmittel von dem Öffnungsrand der Tasche größer als der Abstand der rückseitigen Verschlussmittel von dem Öffnungsrand der Tasche. Bei der bekannten Tasche ist vorgesehen, entweder die rückseitigen Verschlussmittel und die ersten vorderseitigen Verschlussmittel oder die zusätzlichen rückseitigen Verschlussmittel und die zweiten vorderseitigen Verschlussmittel miteinander zu verbinden, um verschiedene Taschenvolumen einstellen zu können.

### a) Technische Aufgabe

Es ist daher die Aufgabe der vorliegenden Erfindung, eine Tasche für den Versand von Waren im Versandhandel zu schaffen, die einerseits eine Vielzahl verschiedenartiger und verschieden großer Waren versand- bzw. transportsicher aufnehmen kann sowie andererseits als Mehrwegversandtasche verwendet werden und dadurch unnötigen Müll vermeiden kann.

### b) Lösung der Aufgabe

Diese Aufgabe wird mittels einer Tasche mit den Merkmalen des Anspruchs 1 gelöst. Weitere Ausgestaltungen der erfindungsgemäßen Tasche ergeben sich aus den Unteransprüchen.

Erfindungsgemäß wird eine Tasche für den Versand von Waren im Versandhandel vorgeschlagen, die eine Vorderseite, eine Rückseite, eine linke Seite, eine rechte Seite, eine Bodenseite und eine mit einem geschlossen umlaufenden Öffnungsrand versehene Taschenöffnung zum Einbringen und Entnehmen der zu versendenden Waren aufweist. Auf der Rückseite sind rückseitige Verschlussmittel mit einem rückseitigen Abstand zu dem Öffnungsrand angeordnet. Auf der Vorderseite sind erste vorderseitige Verschlussmittel mit einem ersten vorderseitigen Abstand zu dem Öffnungsrand und zweite vorderseitige Verschlussmittel mit einem zweiten vorderseitigen Abstand zu dem Öffnungsrand angeordnet.

Der erste vorderseitige Abstand ist kleiner als der zweite vorderseitige Abstand. Des Weiteren ist der rückseitige Abstand kleiner als der erste vorderseitige Abstand. Dadurch ist es möglich, die von dem Öffnungsrand umgebene Taschenöffnung durch Umschlagen eines oberen Bereichs der Rückseite auf die Vorderseite und durch Verbinden der rückseitigen Verschlussmittel mit den ersten vorderseitigen Verschlussmitteln zur Bereitstellung eines größeren Taschenvolumens oder mit den zweiten vorderseitigen Verschlussmitteln zur Bereitstellung eines kleineren Taschenvolumens zu verschließen. Das Material der erfindungsgemäßen Tasche weist die hierfür erforderliche Flexibilität auf.

Die erfindungsgemäße Tasche ist deckellos ausgestaltet. Dies bedeutet, dass sie kein von dem umlaufenden Öffnungsrand weg ragendes Deckelelement mit deckelseitigen Verschlussmitteln aufweist, mittels welchem die Taschenöffnung durch Verbinden der deckelseitigen Verschlussmittel mit den ersten vorderseitigen Verschlussmitteln oder mit den zweiten vorderseitigen Verschlussmitteln geschlossen werden könnte. Trotz ihrer Deckellosigkeit kann die erfindungsgemäße Tasche dicht und sicher verschlossen werden.

Der Vorteil der erfindungsgemäßen Tasche besteht darin, dass wenigstens zwei verschieden große Taschenvolumen zur Verfügung gestellt werden können. Das für das Verpacken der Ware genutzte Taschenvolumen ist somit an die geometrischen Abmessungen der Ware anpassbar. Für verschieden große Waren muss der Versandhändler somit nicht verschieden große Versandverpackungen vorhalten.

Vorzugsweise ist der rückseitige Abstand kleiner als oder gleich 30% des ersten vorderseitigen Abstandes. In vorteilhafter Weise ist der erste vorderseitige Abstand kleiner als oder gleich 60% des zweiten vorderseitigen Abstandes.

Die rückseitigen Verschlussmittel wirken entweder mit den ersten vorderseitigen Verschlussmitteln oder mit den zweiten vorderseitigen Verschlussmitteln zusammen. Alle vorgenannten Verschlussmittel sind derart robust ausgelegt, dass sie problemlos den Belastungen standhalten, die während des Transports der mit der Ware gefüllten Tasche von dem Versandhändler zu dem Kunden üblicherweise auftreten. Darüber hinaus sind alle vorgenannten Verschlussmittel derart ausgebildet, dass sie sich insbesondere während des Transports von dem Versandhändler zu dem Kunden nicht ohne ein Zusatzwerkzeug öffnen lassen.

Erfindungsgemäß sind die rückseitigen Verschlussmittel einerseits sowie die ersten vorderseitigen Verschlussmittel und die zweiten vorderseitigen Verschlussmittel andererseits gleichartig ausgebildet. Es können die gleichartigen Verschlussmittel mit Hilfe eines separaten Verschlusselements miteinander verbunden werden. Dieses separate Verschlusselement bewirkt vorzugsweise gleichzeitig die Sicherung der mit seiner Hilfe verbundenen Verschlussmittel gegen unbefugtes Öffnen durch Dritte ohne ein Zusatzwerkzeug.

Bei den gleichartigen Verschlussmitteln handelt es sich erfindungsgemäß um jeweils wenigstens eine robuste und reißfest an der Tasche angebrachte Schlaufe. Das rückseitige Verschlussmittel wird von wenigstens einer rückseitigen Schlaufe gebildet. Das erste vorderseitige Verschlussmittel wird von wenigstens einer ersten vorderseitigen Schlaufe gebildet und das zweite vorderseitige Verschlussmittel besteht aus wenigstens einer zweiten vorderseitigen Schlaufe. Das separate Verschlusselement wird von einem Seilmittel gebildet und die wenigstens eine rückseitige Schlaufe kann mit Hilfe des Seilmittels, vorzugsweise einem Kabelbinder, mit der wenigstens einen ersten vorderseitigen Schlaufe oder mit der wenigstens einen zweiten vorderseitigen Schlaufe verbunden werden. Die Taschenöffnung lässt sich dadurch sicher und gegen die Belastungen während Transports der mit Ware gefüllten Tasche widerstandsfähig verschließen. Die Anzahl der Schlaufen pro Verschlussmittel wird in Abhängigkeit von der absoluten Größe der Tasche in geeigneter Weise gewählt. Es sind ein, zwei, drei oder mehr Schlaufen pro Verschlussmittel denkbar.

In vorteilhafter Weise können auf der linken Seite und auf der rechten Seite der Tasche seitliche Komprimiermittel zum Raffen der linken Seite und der rechten Seite angeordnet werden. Das in Abhängigkeit von den zusammenwirkenden Verschlussmitteln größere Taschenvolumen oder kleinere Taschenvolumen kann dann durch Raffen der linken Seite und der rechten Seite der Tasche reduziert werden, wodurch gleichzeitig ein Fixieren der in der Tasche befindlichen Ware möglich ist. Ein Bewegen oder Herumfallen der Ware in der Tasche während ihres Transports wird dadurch in vorteilhafter Weise verhindert.

Die Vorderseite der Tasche spannt eine vordere Ebene auf, während die Rückseite der Tasche eine hintere Ebene aufspannt. In besonders vorteilhafter Weise sind die seitlichen Komprimiermittel an solchen Stellen oder Bereichen der linken bzw. der rechten Seite angeordnet, die sowohl von der vorderen Ebene der Tasche als auch von der hinteren Ebene Tasche beabstandet sind. Auf diese Weise kann eine maximale Raffwirkung der seitlichen Komprimiermittel festgelegt werden.

Als seitliche Komprimiermittel eignen sich sämtliche Mittel, die sich möglichst einfach miteinander verbinden sowie wieder öffnen lassen. Auf eine sichere Verbindung im Sinne der Vermeidung eines unbefugten Öffnens durch Dritte kommt es hier nicht an. Vorzugsweise werden die seitlichen Komprimiermittel von Klettverschlussmitteln oder von Druckknopfmitteln oder von Reißverschlussmitteln gebildet.

In weiterhin vorteilhafter Weise können auf der Bodenseite der Tasche bodenseitige Komprimiermittel zum Raffen der Bodenseite angeordnet werden. Auch die bodenseitigen Komprimiermittel ermöglichen es, das in Abhängigkeit von den zusammenwirkenden Verschlussmitteln vorhandene größere Taschenvolumen oder kleinere Taschenvolumen zu reduzieren und dadurch die in der Tasche befindliche Ware zu fixieren, so dass einem Bewegen oder Herumfallen der Ware in der Tasche entgegengewirkt wird.

Die bodenseitigen Komprimiermittel können bei Bedarf nahezu in der von der Vorderseite aufgespannten vorderen Ebene sowie nahezu in der von der Rückseite aufgespannten hinteren Ebene angeordnet werden. Auf diese Weise lassen sich die vordere untere Kante und die rückseitige untere Kante der Tasche so gut wie ganz aneinander heranraffen, so dass die Tiefe der Bodenseite der Tasche - betrachtet in der Blickrichtung senkrecht zu der von der Vorderseite bzw. der Rückseite aufgespannten vorderen bzw. hinteren Ebene - auf nahezu null reduziert werden kann.

Auch die bodenseitigen Komprimiermittel sind vorzugsweise derart ausgelegt, dass sie sich möglichst einfach miteinander verbinden und voneinander lösen lassen. Geeignet sind beispielsweise Klettverschlussmittel oder Druckknopfmittel oder Reißverschlussmittel.

In vorteilhafter Weise ist die erfindungsgemäße Tasche mit einer Versandfenstereinheit versehen, die eine seitliche Öffnung zum Einschieben eines Paketscheins in das Versandfenster aufweist. Auf dem Paketschein befinden sich die üblichen Logistik-, Waren- sowie Empfängerdaten. Eine Verschlusslasche zum Verschließen der seitlichen Öffnung sorgt dafür, dass ein Herausfallen des Paketscheins aus der Versandfenstereinheit insbesondere während des Transports der Tasche verhindert wird.

In besonders vorteilhafter Weise ist an der Vorderseite und an der Rückseite der Tasche jeweils eine Trageschlaufe derart angeordnet, dass die Tasche nach der Zustellung der Ware bei einem Empfänger von dem Empfänger als Permanenttragetasche verwendet werden kann. Dabei ist die jeweilige Trageschlaufe vorzugsweise an der Innenfläche der Vorderseite bzw. der Rückseite angebracht, so dass sie während der Verwendung der erfindungsgemäßen Tasche im Rahmen des Versandhandels nicht stören kann. Eine Mehrwegnutzung der erfindungsgemäßen Tasche findet in diesem Fall zum einen wenigstens einmal als Versandtasche zum Versenden der Ware von dem Versandhändler zu dem Empfänger sowie ggf. mehrfach als Tragetasche am Ende des Empfängers statt.

Die erfindungsgemäße Tasche ist in vorteilhafter Weise als wiederverwendbare Mehrwegversandtasche ausgelegt. Dies bedeutet, dass sie aus robustem, reißfestem Material hergestellt ist und im Übrigen sämtliche Verschlussmittel, Komprimiermittel sowie die Versandfenstereinheit den Belastungen während eines mehrfachen Gebrauchs als Versandtasche für den Versand von Waren im Versandhandel gewachsen sind.

Der Mehrwegkreislauf der erfindungsgemäßen Tasche kann bei einem Versandhändler, der gleichzeitig Filialgeschäfte im stationären (Einzel-)Handel unterhält, in besonders geschickter Weise gestaltet werden. Der Kunde bestellt online bei dem Versandhändler Ware und erhält diese in der erfindungsgemäßen Tasche zugesandt. Zusätzlich zu dem Warenpreis zahlt der Kunde im Rahmen seiner Online-Bestellung einen Pfandbetrag für die erfindungsgemäße Tasche. Nach Erhalt und Auspacken der Ware kann der Kunde die erfindungsgemäße Tasche in einem der stationären Filialläden des Versandhändlers zurückgeben und erhält den Pfandbetrag zurück. In dem stationären Filialladen werden zurückgegebene Taschen gesammelt und schließlich wieder dem Warenlager für den Versandhandel zugeführt. Auf diese Weise wird die erfindungsgemäße Tasche zu einer Mehrwegversandtasche, die den Versandhandel mit dem stationären (Einzel-)Handel verknüpft.

### c) Ausführungsbeispiel

Nachfolgend wird ein Ausführungsbeispiel der erfindungsgemäßen Tasche beispielhaft anhand der beigefügten Zeichnungen beschrieben. Es zeigen:
- Fig. 1:: eine perspektivische Ansicht auf die Vorderseite eines Ausführungsbeispiels der erfindungsgemäßen Tasche;
- Fig. 2:: eine perspektivische Ansicht auf die Rückseite der in der Fig. 1 gezeigten Tasche;
- Fig. 3:: eine perspektivische Ansicht auf die Bodenseite der in der Fig. 1 gezeigten Tasche;
- Fig. 4:: eine vergrößerte Darstellung des Details X aus Fig. 1; und
- Fig. 5:: eine vergrößerte Schnittansicht gemäß Schnitt A-A in Fig. 4.

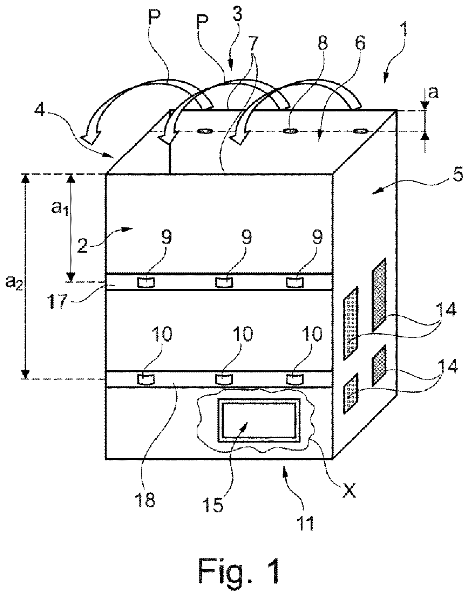

Gleiche Bezugszeichen in den Fig. 1 bis 5 kennzeichnen gleiche Teile bzw. Elemente des gezeigten Ausführungsbeispiels.

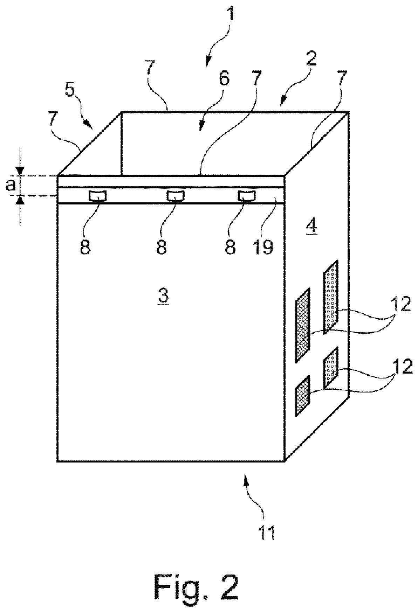

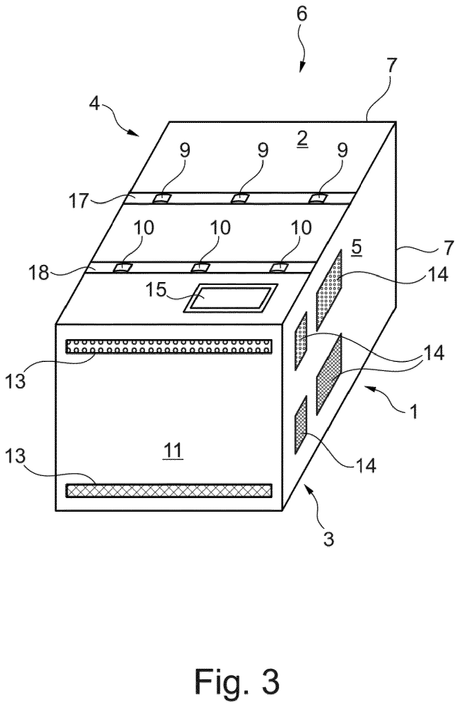

In Fig. 1 ist als Ausführungsbeispiel eine erfindungsgemäße Tasche 1 schematisch dargestellt. Sie besteht aus einem flexiblen Material und kann in der Art einer flexiblen Tüte von Hand verformt werden. Die Tasche 1 weist eine Vorderseite 2, eine in Fig. 2 zu sehende Rückseite 3, eine in Fig. 2 zu sehende linke Seite 4, eine rechte Seite 5 sowie eine in Fig. 3 zu sehende Bodenseite 11 auf.

Die in Fig. 1 oberen Kanten der Vorderseite 2, der rechten Seite 5, der Rückseite 3 und der linken Seite 4 bilden einen geschlossen umlaufenden Öffnungsrand 7, der bei dem gezeigten Ausführungsbeispiel in einer Ebene liegt. Der Öffnungsrand 7 umschließt eine Taschenöffnung 6, durch welche hindurch Waren in die Tasche 1 eingebracht und Waren aus der Tasche 1 entnommen werden können. Bei dem gezeigten Ausführungsbeispiel verläuft die Ebene, in welcher der Öffnungsrand 7 liegt, außerdem parallel zu der Ebene der Bodenseite 11 der Tasche 1.

An der Außenfläche der Vorderseite 2 sind in Fig. 1 drei Schlaufen 9 als erste vorderseitige Verschlussmittel und drei Schlaufen 10 als zweite vorderseitige Verschlussmittel zu erkennen. Die Schlaufen 9 sind mit Hilfe eines ersten vorderseitigen Gewebebandes 17 an der Vorderseite 2 befestigt, wobei das Gewebeband 17 bei dem gezeigten Ausführungsbeispiel an die Vorderseite 2 angenäht ist. Die Schlaufen 10 sind mittels eines zweiten vorderseitigen Gewebebandes 18 an der Vorderseite 2 befestigt, wobei bei dem gezeigten Ausführungsbeispiel auch das Gewebeband 18 an die Vorderseite 2 angenäht ist. Die drei Schlaufen 9 können ebenso wie die drei Schlaufen 10 beispielsweise durch Zusammenraffen des Gewebebandes 17 bzw. 18 ausgebildet werden. Die Schlaufen 9 bzw. 10 bestehen dann aus relativ kurzen Teilabschnitten des Gewebebandes 17 bzw. 18 selbst.

In Fig. 2 ist die Rückseite 3 der erfindungsgemäßen Tasche 1 zu sehen. Im oberen Bereich der Außenfläche der Rückseite 3 sind drei Schlaufen 8 als rückseitige Verschlussmittel angebracht. Auch die Schlaufen 8 sind bei dem gezeigten Ausführungsbeispiel mit Hilfe eines rückseitigen Gewebebandes 19 an die Rückseite 3 angenäht. Durch Zusammenraffen des Gewebebandes 19 können die Schlaufen 8 von relativ kurzen Teilabschnitten des Gewebebandes 19 selbst gebildet werden.

Der in Fig. 1 eingezeichnete Abstand a₁, der von der Mitte des ersten vorderseitigen Gewebebandes 17 zu dem an der Vorderseite 2 befindlichen Randabschnitt des Öffnungsrandes 7 gemessen wird, ist kleiner als der in Fig. 1 eingezeichnete Abstand a₂, der von der Mitte des zweiten vorderseitigen Gewebebandes 18 zu dem an der Vorderseite 2 befindlichen Randabschnitt des Öffnungsrandes 7 gemessen wird.

In den Fig. 1 und 2 ist der Abstand a eingezeichnet, der von der Mitte des rückseitigen Gewebebandes 19 und somit von den Schlaufen 8 zu dem an der Rückseite 3 befindlichen Randabschnitt des Öffnungsrandes 7 gemessen wird. Dieser Abstand a ist kleiner als der Abstand a₁.

Die verschieden großen Abstände a₁ und a₂ ermöglichen ein Verschließen der Taschenöffnung 6 in Abhängigkeit von der Größe der zu verpackenden Ware. Unabhängig davon, ob die Ware ein größeres oder ein kleineres Taschenvolumen erfordert, wird die Tasche 1 in den in den Fig. 1 und 2 oberen Bereichen ihrer linken Seite 4 und ihrer rechten Seite 5 zunächst derart zusammengedrückt, dass der in Fig. 1 vordere Randabschnitt des Öffnungsrandes 7 und der in Fig. 1 hintere Randabschnitt des Öffnungsrandes 7 im Wesentlichen aneinander liegen. Dann wird der obere Bereich der Rückseite 3 mit den drei Schlaufen 8 entsprechend der Pfeile P auf die Vorderseite 2 umgeschlagen, so dass die Schlaufen 8 mit den Schlaufen 9 oder mit den Schlaufen 10 zueinander fluchten und verbunden werden können. Während der Umschlagbewegung gemäß der Pfeile P dreht sich das Gewebeband 19 um ca. 180° um seine in Fig. 2 horizontal verlaufende Längsachse.

Erfordert die zu verpackende Ware ein größeres Taschenvolumen, so werden die Schlaufen 8 mit den Schlaufen 9 verbunden. Reicht für die zu verpackende Ware hingegen ein kleineres Taschenvolumen, so werden die Schlaufen 8 mit den Schlaufen 10 verbunden. Die Verbindung der Schlaufen 8 mit den Schlaufen 9 oder mit den Schlaufen 10 erfolgt bei dem gezeigten Ausführungsbeispiel mit Hilfe von insgesamt drei Kabelbindern. Jede der drei Schlaufen 8 wird mit Hilfe eines der drei Kabelbinder mit einer der Schlaufen 9 oder mit einer der Schlaufen 10 verbunden. Dabei durchsetzt der jeweilige Kabelbinder sowohl die Schlaufe 8 als auch die Schlaufe 9 oder sowohl die Schlaufe 8 als auch die Schlaufe 10. Da die üblichen Kabelbinder nicht ohne Zusatzwerkzeug, wie eine Schere o.ä., geöffnet werden können, stellt die Verbindung der Schlaufen 8 mit den Schlaufen 9 oder den Schlaufen 10 mittels Kabelbindern eine für den Transport der zu versendenden Ware hinreichend sichere Verschlussmethode dar.

In Fig. 1 sind an der rechten Seite 5 Klettverschlussstreifen 14 zu erkennen, die als Klettverschlussmittel bzw. seitliche Komprimiermittel zum Raffen der rechten Seite 5 der Tasche 1 fungieren. Wie in Fig. 2 zu sehen ist, sind in symmetrischer Anordnung zu den Klettverschlussstreifen 14 an der linken Seite 4 Klettverschlussstreifen 12 angebracht, die als Klettverschlussmittel bzw. seitliche Komprimiermittel zum Raffen der linken Seite 4 der Tasche 1 fungieren. Zum Raffen der linken bzw. rechten Seite 4 bzw. 5 werden jeweils die mit einem "o" und einem "x" gekennzeichneten Klettverschlussstreifen 12 bzw. 14 miteinander verbunden. Dadurch werden in Blickrichtung der Fig. 1 bzw. der Figur 2 die Vorderseite 2 und die Rückseite 3 aufeinander zu bewegt, so dass sich deren Abstand und damit das Taschenvolumen verringert. Anstelle der Klettverschlussstreifen 12, 14 sind auch andersartige seitliche Komprimiermittel denkbar, wie beispielsweise Druckknöpfe oder Reißverschlüsse.

Wie am besten in Fig. 1 zu erkennen ist, befinden sich die Klettverschlussstreifen 12, 14 in Fig. 1 unterhalb der drei Schlaufen 9, die als erste vorderseitige Verschlussmittel fungieren. Oberhalb der ersten vorderseitigen Verschlussmittel werden keine seitlichen Komprimiermittel benötigt, da dieser Bereich zum Verschließen der Tasche 1 umgeschlagen wird.

Des Weiteren ist in den Fig. 1 und 2 zu erkennen, dass die Klettverschlussstreifen 12, 14 von der Ebene der Vorderseite 2 und von der Ebene der Rückseite 3 beabstandet an der linken Seite 4 bzw. der rechten Seite 5 angeordnet sind. Diese Anordnung bewirkt, dass das Taschenvolumen durch Raffen der linken bzw. rechten Seite 4 bzw. 5 höchstens um ein vorgegebenes maximales Reduktionsvolumen verringert werden kann. Ein Verringern des Taschenvolumens auf nahezu null durch Raffen der linken bzw. rechten Seite 4 bzw. 5 derart, dass die Vorderseite 2 und die Rückseite 3 mit ihren Innenflächen in Anlage aneinander kommen, ist bei dem gezeigten Ausführungsbeispiel ausgeschlossen.

In Fig. 3 sind an der Bodenseite 11 der Tasche 1 zwei Klettverschlussstreifen 13 gezeigt, die als bodenseitige Klettverschlussmittel bzw. bodenseitige Komprimiermittel fungieren. Durch Verbinden der beiden Klettverschlussstreifen 13 miteinander kann die Bodenseite 11 gerafft und damit das Taschenvolumen reduziert werden. Es ist denkbar, den in Fig. 3 oberen Klettverschlussstreifen 13 unmittelbar an der in Fig. 3 oberen Kante der Bodenseite 11 angrenzend anzuordnen und den in Fig. 3 unteren Klettverschlussstreifen 13 an der in Fig. 3 unteren Kante der Bodenseite 11 unmittelbar angrenzend anzuordnen. Die Bodenseite 11 kann dann derart gerafft werden, dass die in Fig. 3 obere Kante der Bodenseite 11 mit der in Fig. 3 unteren Kante der Bodenseite 11 nahezu zusammenfällt.

Das Verpacken einer zu versendenden Ware in der Tasche 1 läuft wie folgt ab:
Zunächst wird die Ware durch die Taschenöffnung 6 hindurch im Innenraum der Tasche 1 positioniert. In Abhängigkeit davon, wie viel Luft die Ware zwischen ihrem oberen Ende und der Ebene der Taschenöffnung 6 lässt, wird entschieden, ob die rückseitigen Schlaufen 8 mit den ersten vorderseitigen Schlaufen 9 oder mit den zweiten vorderseitigen Schlaufen 10 verbunden werden. Entscheidungsgemäß werden die rückseitigen Schlaufen 8 schließlich mit den ersten vorderseitigen Schlaufen 9 oder mit den zweiten vorderseitigen Schlaufen 10 durch Umschlagen gemäß der Pfeile P und Einfädeln der Kabelbinder verbunden, so dass die Taschenöffnung 6 verschlossen und ein größeres oder kleineres Taschenvolumen eingestellt ist.

In Abhängigkeit von ihrer Größe und Geometrie kann sich die Ware dann unter Umständen noch vergleichsweise geringfügig innerhalb der Tasche 1 bewegen. Um der Ware diesen Freiheitsgrad zu nehmen, kann die Tasche 1 mit Hilfe der Klettverschlussstreifen 12, 14 und 11 derart komprimiert werden, dass die Innenflächen der Tasche 1 so an der Ware anliegen, dass sie in der Tasche 1 gehalten und fixiert wird. Ein Bewegen bzw. Herumfallen der Ware in der Tasche 1 während des Transports zum Kunden kann somit auf sichere Weise ausgeschlossen werden.

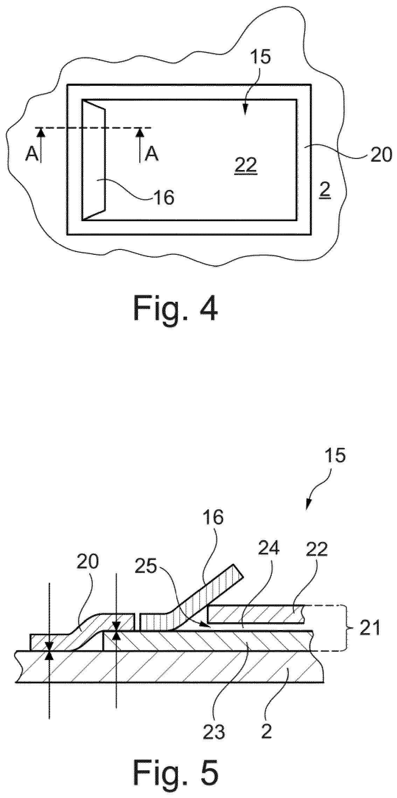

Fig. 4 zeigt das vergrößerte Detail X aus Fig. 1. Es ist eine Versandfenstereinheit 15 zu erkennen, die mittels eines Gewebebandes 20 an der Vorderseite 2 der Tasche 1 angenäht ist.

Fig. 5 zeigt eine Schnittansicht gemäß dem in Fig. 4 gekennzeichneten Schnitt A-A. Bei dem gezeigten Ausführungsbeispiel weist die Versandfenstereinheit 15 eine witterungsbeständige Hülle 21 zur Aufnahme eines nicht gezeigten Paketscheins auf. Die Hülle 21 besteht aus einem durchsichtigen Versandfenster 22 und einer Trägerschicht 23, die mit Hilfe des Gewebebandes 20 an der Vorderseite 2 der Tasche 1 angenäht ist.

Der Paketschein kann durch eine schlitzförmige Öffnung 25 in einen für ihn vorgesehenen Aufnahmehohlraum 24 der Hülle 21 eingeschoben werden. Eine an der Trägerschicht 23 befestigte Verschlusslasche 16 kann hierzu in Fig. 5 im Gegenuhrzeigersinn aufgebogen werden. Nachdem sich der Paketschein in dem Aufnahmehohlraum 24 befindet, kann die Verschlusslasche 16 derart durch die Öffnung 25 in den Aufnahmehohlraum 24 gesteckt werden, dass sie zwischen dem durchsichtigen Versandfenster 22 und dem Paketschein selbst zu liegen kommt. Dadurch wird in besonders vorteilhafter Weise verhindert, dass der Paketschein während des Transports der Ware in der Tasche 1 aus der Versandfenstereinheit 15 herausfallen kann.

Bei dem gezeigten Ausführungsbeispiel ist die Versandfenstereinheit 15 an der Vorderseite 2 der Tasche 1 angebracht. Selbstverständlich ist denkbar, die Versandtascheneinheit 15 alternativ an einer anderen geeigneten Stelle der Tasche 1 anzubringen, beispielsweise im unteren Bereich der in Fig. 2 gezeigten Rückseite 3.

Vorzugsweise an der Innenfläche der Vorderseite 2 und an der Innenfläche der Rückseite 3 kann jeweils eine in den Zeichnungen nicht gezeigte Trageschlaufe angebracht werden, die während der Verwendung der Tasche 1 im Rahmen des Versandhandels zunächst keine Funktion hat. Entscheidet sich der Kunde nach Erhalt der Ware und Auspacken derselben aus der Tasche 1 nicht dazu, die Tasche 1 gegen Pfand zurückzugeben, so kann er die Tasche 1 selbst mehrfach als Permanenttragetasche benutzen, wozu die Trageschlaufen an den Innenflächen der Vorderseite 2 und der Rückseite 3 dienen.

Die erfindungsgemäße Tasche 1 ermöglicht somit ihre Verwendung als Mehrwegtasche in zweierlei Hinsicht:
Zum einen kann sie als Mehrwegversandtasche im Versandhandel eingesetzt werden. Dies ist dann der Fall, wenn der von dem Versandhändler mit der Ware belieferte Kunde die Tasche 1 gegen Pfand wieder zurückgibt, was er vorzugsweise in einem Filialladen des stationären (Einzel-)Handels erledigen kann, welcher ggf. auch von dem Versandhändler unterhalten wird. Die zurückgegebene Tasche 1 wird schließlich zur Wiederverwendung in das Lager des Versandhandels zurückgebracht. Die Tasche 1 durchläuft in diesem Fall einen Wiederverwendungskreislauf als Mehrwegversandtasche.

Zum anderen besteht die Möglichkeit, die Tasche 1 ggf. nur ein einziges Mal als Versandtasche zu verwenden. Nach Erhalt der Ware von dem Versandhändler entscheidet der Kunde, die Tasche 1 zu behalten und sie mit Hilfe der Trageschlaufen als Permanenttragetasche für seine eigenen Transportzwecke zu benutzen. In diesem Fall dient die Tasche 1 einer geteilten Mehrwegverwendung, nämlich einerseits einer wenigstens einmaligen Verwendung als Versandtasche und andererseits einer Mehrwegverwendung als Permanenttragetasche.

### BEZUGSZEICHENLISTE

- 1: Tasche
- 2: Vorderseite
- 3: Rückseite
- 4: Linke Seite
- 5: Rechte Seite
- 6: Taschenöffnung
- 7: Öffnungsrand
- 8: Rückseitige Verschlussmittel (Schlaufen)
- 9: Erste vorderseitige Verschlussmittel (Schlaufen)
- 10: Zweite vorderseitige Verschlussmittel (Schlaufen)
- 11: Bodenseite
- 12: Seitliche Komprimiermittel (Klettverschlussstreifen)
- 13: Bodenseite
- 14: Seitliche Komprimiermittel (Klettverschlussstreifen)
- 15: Versandfenstereinheit
- 16: Verschlusslasche
- 17: Erstes vorderseitiges Gewebeband
- 18: Zweites vorderseitiges Gewebeband
- 19: Rückseitiges Gewebeband
- 20: Gewebeband
- 21: Hülle für Paketschein
- 22: Durchsichtiges Versandfenster
- 23: Trägerschicht
- 24: Aufnahmehohlraum für Paketschein
- 25: Öffnung des Aufnahmehohlraums 24

- P: Pfeile für Umschlagbewegung

## Patentansprüche

1. Tasche (1) für den Versand von Waren im Versandhandel mit einer Vorderseite (2), einer Rückseite (3), einer linken Seite (4), einer rechten Seite (5), einer Bodenseite (11) und einer einen Öffnungsrand (7) aufweisenden Taschenöffnung (6) zum Einbringen und Entnehmen der Waren, wobei
• auf der Rückseite (3) rückseitige Verschlussmittel (8) mit einem rückseitigen Abstand (a) zu dem Öffnungsrand (7) angeordnet sind,
• auf der Vorderseite (2) erste vorderseitige Verschlussmittel (9) mit einem ersten vorderseitigen Abstand (a₁) zu dem Öffnungsrand (7) und zweite vorderseitige Verschlussmittel (10) mit einem zweiten vorderseitigen Abstand (a₂) zu dem Öffnungsrand (7) angeordnet sind, und
• der erste vorderseitige Abstand (a₁) kleiner ist als der zweite vorderseitige Abstand (a₂) und der rückseitige Abstand (a) kleiner ist als der erste vorderseitige Abstand (a₁), so dass die Taschenöffnung (6) durch Umschlagen eines oberen Bereichs der Rückseite (3) auf die Vorderseite (2) und Verbinden der rückseitigen Verschlussmittel (8) mit den ersten vorderseitigen Verschlussmitteln (9) zur Bereitstellung eines größeren Taschenvolumens oder mit den zweiten vorderseitigen Verschlussmitteln (10) zur Bereitstellung eines kleineren Taschenvolumens verschließbar ist,
dadurch gekennzeinet, dass
die rückseitigen Verschlussmittel wenigstens eine rückseitige Schlaufe (8), die ersten vorderseitigen Verschlussmittel wenigstens eine erste vorderseitige Schlaufe (9) und die zweiten vorderseitigen Verschlussmittel wenigstens eine zweite vorderseitige Schlaufe (10) aufweisen, wobei die wenigstens eine rückseitige Schlaufe (8) mit Hilfe eines Seilmittels mit der wenigstens einen ersten vorderseitigen Schlaufe (9) oder mit der wenigstens einen zweiten vorderseitigen Schlaufe (10) verbindbar ist.

2. Tasche nach Anspruch 1,
**dadurch gekennzeichnet, dass**
der rückseitige Abstand (a) kleiner als oder gleich 30% des ersten vorderseitigen Abstandes (a₁) ist.

3. Tasche nach Anspruch 1 oder 2,
**dadurch gekennzeichnet, dass**
der erste vorderseitige Abstand (a₁) kleiner als oder gleich 60% des zweiten vorderseitigen Abstandes (a₂) ist.

4. Tasche nach einem der vorangehenden Ansprüche,
**dadurch gekennzeichnet, dass**
auf der linken Seite (4) und auf der rechten Seite (5) seitliche Komprimiermittel (12, 14) zum Raffen der linken Seite (4) und der rechten Seite (5) angeordnet sind, so dass das größere Taschenvolumen oder das kleinere Taschenvolumen reduzierbar und dadurch in der Tasche befindliche Ware fixierbar ist.

5. Tasche nach Anspruch 4,
**dadurch gekennzeichnet, dass**
die seitlichen Komprimiermittel von Klettverschlussmitteln (12,14) gebildet werden, die von einer von der Vorderseite (2) aufgespannten vorderen Ebene und von einer von der Rückseite (3) aufgespannten hinteren Ebene beabstandet angeordnet sind.

6. Tasche nach Anspruch 4,
**dadurch gekennzeichnet, dass**
die seitlichen Komprimiermittel von Druckknopfmitteln gebildet werden, die von einer von der Vorderseite (2) aufgespannten vorderen Ebene und von einer von der Rückseite (3) aufgespannten hinteren Ebene beabstandet angeordnet sind.

7. Tasche nach Anspruch 4,
**dadurch gekennzeichnet, dass**
die seitlichen Komprimiermittel von Reißverschlussmitteln gebildet werden, die von einer von der Vorderseite (2) aufgespannten vorderen Ebene und von einer von der Rückseite (3) aufgespannten hinteren Ebene beabstandet angeordnet sind.

8. Tasche nach einem der vorangehenden Ansprüche,
**dadurch gekennzeichnet, dass**
auf der Bodenseite (11) bodenseitige Komprimiermittel (13) zum Raffen der Bodenseite (11) angeordnet sind, so dass das größere Taschenvolumen oder das kleinere Taschenvolumen reduzierbar und dadurch in der Tasche befindliche Ware fixierbar ist.

9. Tasche nach Anspruch 8,
**dadurch gekennzeichnet, dass**
die bodenseitigen Komprimiermittel von Klettverschlussmitteln (13) gebildet werden.

10. Tasche nach Anspruch 8,
**dadurch gekennzeichnet, dass**
die bodenseitigen Komprimiermittel von Druckknopfmitteln gebildet werden.

11. Tasche nach Anspruch 8,
**dadurch gekennzeichnet, dass**
die bodenseitigen Komprimiermittel von Reißverschlussmitteln gebildet werden.

12. Tasche nach einem der vorangehenden Ansprüche,
**dadurch gekennzeichnet, dass**
sie eine Versandfenstereinheit (15) mit einer Öffnung (25) zum Einschieben eines Paketscheins in die Versandfenstereinheit (15) aufweist, wobei eine Verschlusslasche (16) zum Verschließen der Öffnung (25) vorhanden ist, so dass ein Herausfallen des Paketscheins aus der Versandfenstereinheit (15) verhindert werden kann.

13. Tasche nach einem der vorangehenden Ansprüche,
**dadurch gekennzeichnet, dass**
an der Vorderseite (2) und an der Rückseite (3) jeweils eine Trageschlaufe derart angeordnet ist, dass die Tasche nach der Zustellung der Ware bei einem Empfänger von dem Empfänger als Permanenttragetasche verwendbar ist.

14. Tasche nach einem der vorangehenden Ansprüche,
**dadurch gekennzeichnet, dass**
sie als wiederverwendbare Mehrwegversandtasche ausgelegt ist.

## Claims

1. Bag (1) for shipping goods in the mail order business with a front side (2), a back side (3), a left side (4), a right side (5), a bottom side (11) and a bag opening (6) comprising an opening edge (7) for inserting and removing the goods, wherein
• back-side closure means (8) are arranged on the back side (3) at a back-side distance (a) to the opening edge (7),
• first front-side closure means (9) are arranged on the front side (2) with a first front-side distance (a₁) to the opening edge (7) and second front-side closure means (10) are arranged with a second front-side distance (a₂) to the opening edge (7), and
• the first front-side distance (a₁) is smaller than the second front-side distance (a₂) and the back-side distance (a) is smaller than the first front-side distance (a₁), so that the bag opening (6) becomes closable by turning over an upper region of the back side (3) to the front side (2) and connecting the back-side closure means (8) with the first front-side closure means (9) to provide a larger bag volume or with the second front-side closure means (10) to provide a smaller bag volume,
**characterized in that**
the back-side closure means have at least one back-side loop (8), the first front-side closure means have at least one first front-side loop (9) and the second front-side closure means have at least one second front side loop (10), wherein the at least one back-side loop (8) can be connected with the aid of tying means to the at least one first front-side loop (9) or to the at least one second front-side loop (10).

2. Bag according to claim 1,
**characterized in that**
the back-side distance (a) is less than or equal to 30% of the first front-side distance (a₁).

3. Bag according to claim 1 or 2,
**characterized in that**
the first front-side distance (a₁) is less than or equal to 60% of the second front-side distance (a₂).

4. Bag according to one of the preceding claims,
**characterized in that**
on the left side (4) and on the right side (5) lateral compression means (12, 14) are arranged for gathering the left side (4) and the right side (5) so that the larger bag volume or the smaller bag volume can be reduced, thereby holding the goods in the bag in place.

5. Bag according to claim 4,
**characterized in that**
the lateral compression means are formed by hook-and-loop fasteners (12, 14), which are spaced apart from a front plane spanning across the front side (2) and from a back plane spanning across the back side (3).

6. Bag according to claim 4,
**characterized in that**
the lateral compression means are formed by snap fastener means, which are spaced apart from a front plane spanning across the front side (2) and from a back plane spanning across the back side (3).

7. Bag according to claim 4,
**characterized in that**
the lateral compression means are formed by zipper fastener means, which are spaced apart from a front plane spanning across the front side (2) and from a back plane spanning across the back side (3).

8. Bag according to one of the preceding claims,
**characterized in that**
bottom-side compression means (13) are arranged on the bottom side (11) for gathering the bottom side (11) so that the larger bag volume or the smaller bag volume can be reduced and thereby the goods in the bag can be held in place.

9. Bag according to claim 8,
**characterized in that**
the bottom-side compression means are formed by hook-and-loop fasteners (13).

10. Bag according to claim 8,
**characterized in that**
the bottom-side compression means are formed by snap fasteners.

11. Bag according to claim 8,
**characterized in that**
the bottom-side compression means are formed by zipper fastener means.

12. Bag according to one of the preceding claims,
**characterized in that**
the bag has a shipping window unit (15) with an opening (25) for inserting a shipping label into the shipping window unit (15), wherein a closure flap (16) for closing the opening (25) is provided, so that the shipping label does not fall out of the shipping window unit (15).

13. Bag according to one of the preceding claims,
**characterized in that**
a carrying strap is arranged on the front side (2) and on the back side (3) respectively such that the bag can be used by a recipient as a permanent carrying bag after the goods have been delivered to the recipient.

14. Bag according to one of the preceding claims,
**characterized in that**
the bag is designed as a reusable, returnable mailing bag.

## Revendications

1. Sac (1) dévolu à l'expédition de marchandises dans la vente par correspondance, comprenant une face antérieure (2), une face postérieure (3), une face de gauche (4), une face de droite (5), une face inférieure (11) et une ouverture (6) munie d'un bord (7) et affectée à l'introduction et au prélèvement des marchandises, sachant que
• des moyens obturateurs postérieurs (8), présentant un espacement postérieur (a) par rapport au bord (7) de l'ouverture, sont disposés sur la face postérieure (3),
• des premiers moyens obturateurs antérieurs (9), présentant un premier espacement antérieur (a₁) par rapport au bord (7) de l'ouverture, et des seconds moyens obturateurs antérieurs (10) présentant un second espacement antérieur (a₂) par rapport audit bord (7) de l'ouverture, sont disposés sur la face antérieure (2), et que
• le premier espacement antérieur (a₁) est plus petit que le second espacement antérieur (a₂), et l'espacement postérieur (a) est plus petit que ledit premier espacement antérieur (a₁), de façon telle que l'ouverture (6) du sac puisse être obturée par rabat d'une région supérieure de la face postérieure (3) sur la face antérieure (2) et par liaison des moyens obturateurs postérieurs (8) avec les premiers moyens obturateurs antérieurs (9), en vue de procurer un plus grand volume du sac, ou avec les seconds moyens obturateurs antérieurs (10) en vue de procurer un plus petit volume dudit sac,
**caractérisé par le fait que**
les moyens obturateurs postérieurs, les premiers moyens obturateurs antérieurs et les seconds moyens obturateurs antérieurs sont pourvus, respectivement, d'au moins une boucle postérieure (8), d'au moins une première boucle antérieure (9) et d'au moins une seconde boucle antérieure (10), sachant que ladite boucle postérieure (8) à présence minimale peut être reliée, à l'aide d'un moyen de serrage par câble, à ladite première boucle antérieure (9) à présence minimale ou à ladite seconde boucle antérieure (10) à présence minimale.

2. Sac selon la revendication 1,
**caractérisé par le fait que**
l'espacement postérieur (a) est inférieur ou égal à 30 % du premier espacement antérieur (a₁).

3. Sac selon la revendication 1 ou 2,
**caractérisé par le fait que**
le premier espacement antérieur (a₁) est inférieur ou égal à 60 % du second espacement antérieur (a₂).

4. Sac selon l'une des revendications précédentes,
**caractérisé par le fait que**
des moyens latéraux de compression (12, 14) sont disposés sur la face de gauche (4) et sur la face de droite (5), en vue du plissage de ladite face de gauche (4) et de ladite face de droite (5), permettant ainsi de réduire le grand volume du sac ou le volume moindre dudit sac et, par conséquent, de bloquer à demeure une marchandise située dans ledit sac.

5. Sac selon la revendication 4,
**caractérisé par le fait que**
les moyens latéraux de compression sont constitués par des moyens (12, 14) de fermeture auto-agrippante qui sont situés à distance d'un plan antérieur, dont l'étendue est couverte par la face antérieure (2), et d'un plan postérieur dont l'étendue est couverte par la face postérieure (3).

6. Sac selon la revendication 4,
**caractérisé par le fait que**
les moyens latéraux de compression sont constitués par des moyens à boutons-pression qui sont situés à distance d'un plan antérieur, dont l'étendue est couverte par la face antérieure (2), et d'un plan postérieur dont l'étendue est couverte par la face postérieure (3).

7. Sac selon la revendication 4,
**caractérisé par le fait que**
les moyens latéraux de compression sont constitués par des moyens de fermeture à glissière qui sont situés à distance d'un plan antérieur, dont l'étendue est couverte par la face antérieure (2), et d'un plan postérieur dont l'étendue est couverte par la face postérieure (3).

8. Sac selon l'une des revendications précédentes,
**caractérisé par le fait que**
des moyens inférieurs de compression (13) sont disposés sur la face inférieure (11) en vue du plissage de ladite face inférieure (11), permettant ainsi de réduire le grand volume du sac ou le volume moindre dudit sac et, par conséquent, de bloquer à demeure une marchandise située dans ledit sac.

9. Sac selon la revendication 8,
**caractérisé par le fait que**
les moyens inférieurs de compression sont constitués par des moyens (13) de fermeture auto-agrippante.

10. Sac selon la revendication 8,
**caractérisé par le fait que**
les moyens inférieurs de compression sont constitués par des moyens à boutons-pression.

11. Sac selon la revendication 8,
**caractérisé par le fait que**
les moyens inférieurs de compression sont constitués par des moyens de fermeture à glissière.

12. Sac selon l'une des revendications précédentes,
**caractérisé par le fait**
**qu'**il comporte une unité (15) à fenêtre d'expédition, percée d'une ouverture (25) dédiée à l'insertion d'un bordereau de colisage dans ladite unité (15) à fenêtre d'expédition, une languette d'obturation (16) étant présente en vue d'obturer ladite ouverture (25), pour pouvoir empêcher une chute dudit bordereau de colisage hors de ladite unité (15) à fenêtre d'expédition.

13. Sac selon l'une des revendications précédentes,
**caractérisé par le fait**
**qu'**une boucle respective de portage est disposée à la face antérieure (2) et à la face postérieure (3), de façon telle qu'à l'issue de la livraison de la marchandise chez un destinataire, ledit destinataire puisse utiliser le sac comme un sac de portage permanent.

14. Sac selon l'une des revendications précédentes,
**caractérisé par le fait**
**qu'**il est conçu en tant que sac d'expédition réutilisable, à usages multiples.
